# EUROPÄISCHE PATENTSCHRIFT

(11) **EP 3 290 110 B1**
(45) Veröffentlichungstag und Bekanntmachung des Hinweises auf die Patenterteilung: **20.02.2019**
(21) Anmeldenummer: 17187691.5
(22) Anmeldetag: 24.08.2017
(51) Int. Cl.: B01J 20/22, B01J 20/06, B01J 20/28, B01J 20/30, B01J 20/32, C02F 1/28, C02F 1/48, C02F 101/20, C02F 101/30

(54) **VERFAHREN ZUR HERSTELLUNG UNVERKOHLTER, MAGNETISIERTER FRUCHTKERNE**
METHOD FOR PREPARATION OF UNCARBONISED MAGNETIZED FRUIT STONES
PROCÉDÉ DE FABRICATION DES NOYAUX DE FRUIT NON CARBONISÉS ET MAGNÉTISÉS

(30) Priorität: 01.09.2016 DE 102016216586
(43) Veröffentlichungstag der Anmeldung: 07.03.2018
(73) Patentinhaber: Fraunhofer-Gesellschaft zur Förderung der angewandten Forschung e.V., 80686 München (DE)
(72) Erfinder: SAADAT, Reza, 63739 Aschaffenburg (DE); THIEL, Deniz, 63755 Alzenau (DE); SANZ MIRABAL, Adriana, 61169 Friedberg (DE)
(74) Vertreter: Pfenning, Meinig & Partner mbB

(56) Entgegenhaltungen:
- CN-A- 102 266 750
- US-A1- 2010 326 921
- N. BABAKHOUYA ET AL: "Adsorption of Cd(II) Ions from Aqueous Solution using Mixed Sorbents Prepared from Olive Stone and Date Pit", JOURNAL OF APPLIED SCIENCES, Bd. 10, Nr. 19, 1. Dezember 2010 (2010-12-01), Seiten 2316-2321, XP055433987, PK ISSN: 1812-5654, DOI: 10.3923/jas.2010.2316.2321
- G. BLÁZQUEZ ET AL: "Removal of cadmium ions with olive stones: the effect of somes parameters", PROCESS BIOCHEMISTRY, Bd. 40, Nr. 8, 1. Juli 2005 (2005-07-01), Seiten 2649-2654, XP055433983, GB ISSN: 1359-5113, DOI: 10.1016/j.procbio.2004.11.007
- WANG J ET AL: "Amino-functionalized Fe"3O"4@SiO"2 core-shell magnetic nanomaterial as a novel adsorbent for aqueous heavy metals removal", JOURNAL OF COLLOID AND INTERFACE SCIENCE, ACADEMIC PRESS,INC, US, Bd. 349, Nr. 1, 1. September 2010 (2010-09-01), Seiten 293-299, XP027113857, ISSN: 0021-9797 [gefunden am 2010-06-30]
- JINWOO LEE ET AL: "Simple Synthesis of Functionalized Superparamagnetic Magnetite/Silica Core/Shell Nanoparticles and their Application as Magnetically Separable High-Performance Biocatalysts", SMALL, Bd. 4, Nr. 1, 18. Januar 2008 (2008-01-18) , Seiten 143-152, XP055427118, DE ISSN: 1613-6810, DOI: 10.1002/smll.200700456

## Beschreibung

Die vorliegende Erfindung betrifft Verfahren zur Herstellung von Fruchtkernen, die verkohlte Anteile von unter 1 Gew.-% bezogen auf 100 Gew.-% des Fruchtkerns aufweisen. Außerdem werden diese Fruchtkerne und deren Verwendung zur Adsorption von Schadstoffen aus Wasser offenbart.

Ein vorrangiges Ziel der Wasserwirtschaft ist die Reduzierung der Arzneimittel- und Mikroschadstoffbelastung von Gewässern. Drei Prozesse stellen zur Zeit die effektivsten Eliminierungsmethoden von Mikroschadstoffen dar:
- Die Verflüchtigung in Belüftungszonen, deren Umfang von der Belüftungsintensität, der Volatilität der Schadstoffe und der Temperatur abhängt.
- Die Sorption durch Anlagerung an Feststoffen im Abwasser. Zur Entfernung der Schadstoffe aus dem Abwasser müssen die Feststoffe abgetrennt werden.
- Der biochemische Abbau durch Mikroorganismen im Belebungsbecken.
Aktuell können kommunale Abwasserreinigungsanlagen Mikroverunreinigungen durch die vorhandenen mechanisch-biologischen Reinigungsstufen aus Abwässern nur mangelhaft entfernen, so dass diese kontinuierlich in die Gewässer eingetragen werden. Um diesen Eintrag aus dem kommunalen Abwasser deutlich zu senken, bedarf es einer erweiterten Reinigung des Wassers mit Hilfe neuer Verfahrenstechniken.

Als effektivste Methode zur Entfernung von Mikroschadstoffen wird die Adsorption angesehen. Adsorptive Reinigungsverfahren beruhen auf der Adsorption von Mikroschadstoffen an der Oberfläche des Adsorbers. Als wirkungsvoller Adsorber hat sich Aktivkohle erwiesen, allerdings sind die Kosten sowie der Energieaufwand zu deren Herstellung sehr hoch. Es wurden in den letzten Jahren zahlreiche Untersuchungen bezüglich alternativer Methoden für die Aktivkohleadsorption unter Verwendung von preiswerten, natürlichen Materialien durchgeführt. Pflanzliche Materialien wurden dabei als günstige Adsorptionsmittel zur Entfernung von Mikroschadstoffen in den Fokus gerückt. Jedoch stellte sich die Abtrennung als problematisch und für größere Abwasseraufbereitungsanlagen noch zu teuer dar, da sich die Filtration oft als zu langsam und unvollständig erwies und eine nötige Verkohlung des Biomaterials zu Bioaktivkohle ebenfalls kostenintensiv und energieaufwendig ist.

WO 2015/066816 A1 betrifft ein Verfahren zur Herstellung von hochporösen auf Birken-basierten Aktivkohlen, beinhaltend die Schritte: Bereitstellen von rindenfreien, getrockneten Hartholz Birkenspänen, Unterziehen dieser Späne eines Pyrolyse-Verfahrens bei Temperaturen von etwa 250 bis etwa 1 000°C, um ein vollständig verkohltes Produkt zu erhalten und Unterwerfen des vollständig verkohlten Produkts eines Abkühlprozesses unter Ausschluss von Sauerstoff, um die Temperatur des vollständig verkohlten Produkts rasch zu senken. Pestizide und Schwermetalle wurden durch die so hergestellte Aktivkohle adsorbiert, womit die Wasserqualität verbessert werden konnte.

US 2009/0220767 A1 beschreibt Kohlenstoff-Kohlenstoff Komposite umfassend einen Kohlenstoff-haltigen Träger und Kohlenstoffstrukturen im Nanogrößenbereich, wobei die Kohlenstoffstrukturen im Nanogrößenbereich auf dem Kohlenstoff-haltigen Träger gezüchtet werden. Der Träger kann porös sein, wie Aktivkohle oder besteht aus Rußteilchen. Die Kohlenstoff-Kohlenstoff Komposite finden Verwendung zur Reinigung von Wasser.

US 2015/0336081 A1 betrifft ein magnetisches Adsorbens, enthaltend ein Adsorbens und Eisenoxid auf der Oberfläche dieses Adsorbens, wobei die gesamte Oberfläche des magnetischen Adsorbens nicht wesentlich kleiner ist als die gesamte Oberfläche des Adsorbens. Als bevorzugtes Adsorbens wird Aktivkohle genannt.

CN 102266750 A betrifft ein in situ Herstellungsverfahren für ein magnetisches Bioabsorbens. Das Verfahren umfasst die folgenden Schritte: 1) Mischen einer Fe³⁺-Lösung und einer Fe²⁺-Lösung, um eine Mischung aus Fe³⁺ und Fe²⁺ zu erhalten; 2) Zugabe eines Bioabsorbens zu einer alkalischen Lösung, Ultraschallbehandlung und einheitliches Mischen, um eine alkalische Lösung enthaltend das Bioabsorbens zu erhalten; und 3) tropfenweise Zugabe der Fe³⁺/Fe²⁺-Mischung in die alkalische Lösung enthaltend das Bioabsorbens unter Ultraschalleinwirkung; Durchführen der Ultraschallreaktion nach der Zugabe, um das magnetische Bioabsorbens zu erhalten.

Verfahren zur Umwandlung von Biomaterialien in Aktivkohle und deren Verwendung als Adsorptionsmittel werden auch in der wissenschaftlichen Literatur, unter anderem in den Artikeln "Conversion of olive wastes to volatiles and carbon adsorbens" von N. Petrov, T. Budinova, M. Razvigorova, J. Parra und P. Galiatsatou, erschienen 2008 in "Biomass and Bioenergy", auf den Seiten 1303 bis 1310 oder "Preparation and characteristics of activated carbon from olive stones and walnut shells" von M.L. Martinez, M.M. Torres, C.A. Guzmán und D.M. Maestri, erschienen 2006 in "Industrial Crops and Products an International Journal", auf den Seiten 23 bis 28, beschrieben.

Ausgehend davon war es Aufgabe der vorliegenden Erfindung Verfahren zur Herstellung von Adsorptionsmittel zur Schadstoffentfernung bereitzustellen, welches eine einfache und günstige Herstellung erlaubt und wobei während der Synthese keine toxischen Produkte, wie z.B. toxische Verkohlungsnebenprodukte, entstehen. Außerdem werden universell einsetzbare Adsorptionsmittel offenbart, d.h. Adsorptionsmitteln die in der Lage sind verschiedenste anorganische und organische Schadstoffe zu entfernen. Diese Adsorptionsmittel sollen nach dem Einsatz, also nach erfolgter Adsorption der Schadstoffe, auch einfach und vollständig wieder aus dem gereinigten Wasser entfernt werden können.

Diese Aufgabe wird durch das Verfahren mit den Merkmalen des Anspruchs 1gelöst.

Erfindungsgemäß wird ein Verfahren zur Herstellung von magnetisierten Fruchtkernen bereitgestellt, die verkohlte Anteile von unter 1 Gew.% bezogen auf 100 Gew.-% des Fruchtkerns aufweisen, welches die folgenden Schritte umfasst:
a) Bereitstellen von Fruchtkernen die keinem Pyrolyse- oder Verkohlungsprozess unterworfen wurden;
b) Bereitstellen von magnetischen Nanopartikeln;
c) Vermahlen der Fruchtkerne aus Schritt a);
d) Erstellen eines Verbunds der magnetischen Nanopartikel aus Schritt b) und der Fruchtkerne aus Schritt c), durch Co-Vermahlen der magnetischen Nanopartikel aus Schritt b) in Gegenwart der Fruchtkerne aus Schritt c), wobei magnetisierte Fruchtkerne erhalten werden, die verkohlte Anteile von unter 1 Gew.-% bezogen auf 100 Gew.-% des Fruchtkerns aufweisen.

Vorteilhafte Ausführungsformen werden in den abhängigen Patentansprüchen 2 bis 10 angegeben.

Weiterhin werden im Wesentlichen unverkohlte, magnetisierte Fruchtkerne offenbart, die die folgenden Komponenten enthalten:
(A) 65 bis 93 Gew.-% im Wesentlichen unverkohlter Fruchtkerne;
(B) 7 bis 35 Gew.-% magnetischer Nanopartikel;
wobei sich die Gewichtsanteile der Komponenten (A), und (B) auf 100 Gew.-% ergänzen.

Außerdem wird die Verwendung der im Wesentlichen unverkohlten, magnetisierten Fruchtkerne zur Adsorption von Schadstoffen aus Wasser beschrieben.

Die Fruchtkerne im Sinne der vorliegenden Erfindung Fruchtkerne wurden keinem Pyrolyse- oder sonstigen Verkohlungsprozess unterzogen, der zum Ziel hat das organische Material zu zersetzen, zu oxidieren oder durch sonstige Prozesse in eine verkohlte Form zu überführen. Bei Trocknungsprozessen denen die Fruchtkerne ausgesetzt werden, oder unter den erhöhten Temperaturen bei Mahlprozessen können dennoch geringe Anteile der Fruchtkerne verkohlt werden, diese verkohlten Anteile liegen aber unter 1 Gew.-% bezogen auf 100 Gew.-% des Fruchtkerns, sie sind also im Wesentlichen unverkohlt

Unter "magnetisiert" wird gemäß der vorliegenden Erfindung verstanden, dass der im Wesentlichen unverkohlte Fruchtkern eine Magnetisierung von zumindest 3 emu/g aufweist, vorzugsweise bestimmt mittels eines Vibrationsmagnetometers wie im experimentellen Teil angegeben.

"Nanopartikel" im Sinne der vorliegenden Erfindung sind Partikel mit einem Partikeldurchmesser *d*₅₀ im Bereich von 1 bis 100 nm, vorzugsweise bestimmt mittels Rasterelektronenmikroskopie wie im experimentellen Teil angegeben.

Unter einem "Verbund" wird im Sinne der vorliegenden Erfindung eine feste Verbindung zwischen den im Wesentlichen unverkohlten Fruchtkernen und den magnetischen Nanopartikeln verstanden. Diese kann durch chemische und/oder physikalische Bindungen ausgebildet werden. Ein "Verbund" unterscheidet sich von einer Mischung, bei der sich die Komponenten z.B. durch Segregation trennen lassen.

Der Begriff "Co-Vermahlen" im Sinne der folgenden Verbindung meint das zumindest zwei Komponenten zur gleichen Zeit in der gleichen Mühle vermahlen werden.

Prinzipiell eignen sich alle Fruchtkerne als Ausgangsmaterial zur Herstellung der magnetisierten Fruchtkerne mit verkohlten Anteilen von unter 1 Gew.-% bezogen auf 100 Gew.-% Fruchtkern gemäß der vorliegenden Erfindung. Gemäß einer bevorzugten Ausführungsform der vorliegenden Erfindung sind die Fruchtkerne ausgewählt aus der Gruppe bestehend aus Avocadokernen, Aprikosenkernen, Dattelkernen, Pflaumenkernen, Kirschkernen, Pfirsichkernen, Nektarinenkernen, Olivenkernen und Mischungen hiervon. Besonders bevorzugte Fruchtkerne sind Olivenkerne, unter anderem da diese in großen Mengen verfügbar sind.

Als magnetische Nanopartikel sind für die vorliegende Erfindung sowohl kommerzielle verfügbare magnetische Nanopartikel, als auch eigens zur Ausführung der Erfindung hergestellte Nanopartikel geeignet. Nach einer bevorzugten Ausführungsform der vorliegenden Erfindung sind die in Schritt b) bereitgestellten Nanopartikel ausgewählt aus der Gruppe bestehend aus Magnetit, Maghemit, gemischten Eisenoxiden bei denen Eisen teilweise durch andere Metalle, vorzugsweise durch Magnesium, ersetzt ist und Mischungen daraus. Magnetit weist unter den natürlich vorkommenden Mineralien die stärksten magnetischen Eigenschaften auf und ist besonders bevorzugt.
Eine besonders bevorzugte Kombination besteht aus Fruchtkernen mit verkohlten Anteilen von unter 1 Gew.-% bezogen auf 100 Gew.-% Fruchtkern und magnetischen Nanopartikeln Olivenkerne und Magnetit.

Die im Wesentlichen unverkohlten, magnetisierten Fruchtkerne, bestehen bevorzugt aus:
(A) 65 bis 93 Gew.-% im Wesentlichen unverkohlten Fruchtkernen;
(B) 7 bis 25 Gew.-% magnetischen Nanopartikeln;
(C) 0 bis 10 Gew.-% Additiven,
wobei sich die Gewichtsanteile der Komponenten (A), (B) und (C) auf 100 Gew.-% ergänzen.

Als Additive werden z.B. Öle der Fruchtkerne, sonstige Fruchtbestandteile und Verarbeitungshilfsmittel verstanden. Der Zusatz von Verarbeitungsmitteln oder sonstigen Additiven ist aber in keiner Weise essentiell zur Herstellung der im Wesentlichen unverkohlten, magnetisierten Fruchtkerne.
Nach einer bevorzugten Ausführungsform weisen die im Wesentlichen unverkohlten Fruchtkerne die folgende Zusammensetzung auf:
(A) 80 bis 90 Gew.-% im Wesentlichen unverkohlter Fruchtkerne;
(B) 10 bis 15 Gew.-% magnetischer Nanopartikel;
(C) 0 bis 5 Gew.-% Additive,
wobei sich die Gewichtsanteile der Komponenten (A), (B) und (C) auf 100 Gew.-% ergänzen.

Gemäß einer weiteren Ausführungsform weisen die im Wesentlichen unverkohlten, magnetisierten Fruchtkerne eine BET-Oberfläche im Bereich von 1 bis 70 m²/g, vorzugsweise 3 bis 10 m²/g und insbesondere bevorzugt 4 bis 7 m²/g, vorzugsweise bestimmt wie im experimentellen Teil angegeben auf.

Nach einer anderen Ausführungsform weisen die im Wesentlichen unverkohlten, magnetisierten Fruchtkerne eine Magnetisierung von 5 bis 50 emu/g, vorzugsweise 6 bis 20 emu/g und insbesondere bevorzugt 7 bis 10 emu/g auf, vorzugsweise bestimmt auf einem Vibrationsmagnetometer wie im experimentellen Teil angegeben.

Gemäß einer anderen bevorzugten Ausführungsform der vorliegenden Erfindung umfasst das Verfahren zur Herstellung von magnetisierten Fruchtkernen mit verkohlten Anteilen von unter 1 Gew.-% bezogen auf 100 Gew.-% Fruchtkern neben den oben angegebenen Schritten a) bis d) auch die folgenden weiteren Schritte:
e) Waschen der Fruchtkerne mit verkohlten Anteilen von unter 1 Gew.-% bezogen auf 100 Gew.-% Fruchtkern mit einem Lösemittel vor Schritt d);
f) Entfernen des in Schritt e) verwendeten Lösemittels;
g) Trocknen der Fruchtkerne mit verkohlten Anteilen von unter 1 Gew.-% bezogen auf 100 Gew.-% Fruchtkern.

Eine bevorzugte Ausführungsform der vorliegenden Erfindung sieht vor, dass das in Schritt e) verwendete Lösemittel ausgewählt ist aus der Gruppe bestehend aus Wasser, organischen Lösemitteln, insbesondere Alkoholen, Aceton, Toluol, Tetrahydrofuran und Mischungen hiervon. Besonders bevorzugt ist es Wasser als Lösemittel zu verwenden.

Nach einer weiteren bevorzugten Ausführungsform wird die Trocknung in Schritt g) bei Temperaturen von 30 bis 150°C, bevorzugt bei 50 bis 70°C durchgeführt.

Eine weitere bevorzugte Ausführungsform der vorliegenden Erfindung sieht vor, dass die Vermahlung gemäß Schritt c) in einer Rotormühle durchgeführt wird. Bevorzugt wird dabei vermahlen bis die Fruchtkerne einen mittleren Partikeldurchmesser *d*₅₀ von 1 bis 100 µm, besonders bevorzugt 1 bis 20 µm aufweisen.

Gemäß der vorliegenden Erfindung wird der Verbund in Schritt d) durch Co-Vermahlen der magnetischen Nanopartikel aus Schritt b) in Gegenwart der vermahlenen Fruchtkerne gemäß Schritt c) erzeugt. Das Massenverhältnis zwischen den magnetischen Nanopartikeln und den Fruchtkernen beträgt dabei bevorzugt von 1:4 bis 1:15 und insbesondere bevorzugt von 1:9 bis 1:11 und ist am meisten bevorzugt 1:10.
Eine weitere Ausführungsform der vorliegenden Erfindung sieht vor, dass Schritt c) in derselben Mühle wie Schritt d) durchgeführt wird. Dabei werden die magnetischen Nanopartikel vorzugsweise nach Schritt c) in die Mühle eingebracht.
Nach einer anderen Ausführungsform der vorliegenden Erfindung wird die Co-Vermahlung gemäß Schritt d) in einer Mühle ausgewählt aus der Gruppe bestehend aus Kugelmühlen, insbesondere Schwingmühlen, Trommelmühlen, Planetenkugelmühlen, Scheibenmühlen, insbesondere Scheibenschwingmühlen durchgeführt. Es wird dabei vorzugsweise co-vermahlen bis die unverkohlten, magnetisierten Fruchtkerne mit verkohlten Anteilen von unter 1 Gew.-% bezogen auf 100 Gew.-% Fruchtkern einen *d*₅₀ von 1 bis 300 µm, besonders bevorzugt 10 bis 100 µm aufweisen.

Der Verbund in Schritt d) kann auch durch Ausfällung der in Schritt b) bereitgestellten magnetischen Nanopartikel auf der Oberfläche des Fruchtkerns aus Schritt c) erzeugt werden.
Die Ausfällung kann dabei beispielsweise erfolgen wie im Journal of Colloid and Interface Science, 2010, Volume 349, Seiten 293 bis 299, oder in Small 2008, 4, No. 1, Seiten 143 bis 153, beschrieben.
Weiterhin werden im Wesentlichen unverkohlten, magnetisierten Fruchtkerne herstellbar gemäß den erfindungsgemäßen Verfahren offenbart und deren Verwendungen wie unten angegeben.

Außerdem wird die Verwendung der im Wesentlichen unverkohlten, magnetisierten Fruchtkerne zur Adsorption von Schadstoffen aus Wasser beschrieben.
Die im Wesentlichen unverkohlten, magnetisierten Fruchtkerne werden verwendet um anorganische Schadstoffe, insbesondere um positiv geladene Metallionen ausgewählt aus der Gruppe bestehend aus Aluminiumsalzen, Bleisalzen, Mangansalzen, Kupfersalzen, Eisensalzen, Quecksilbersalzen und Mischungen daraus zu adsorbieren.

Außerdem wird die Verwendung der im Wesentlichen unverkohlten, magnetisierten Fruchtkerne zur Adsorption von polaren, organischen Schadstoffen, insbesondere ausgewählt aus der Gruppe bestehend aus Medikamenten und deren Metaboliten und Mischungen daraus, beschrieben. Ein bevorzugtes Medikament ist dabei Acetylsalicylsäure.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Verwendete Messgeräte und Messmethoden

### ICP-OES

Die ICP-OES Untersuchungen wurden auf einem Optima 8300 von Perkin Elmer durchgeführt, die Auswertung erfolgte mit der Software WinLab32.

### HPLC

Die HPLC-Analysen wurden auf einem AZURA Kompakt der Firma Knauer durchgeführt, die Auswertung erfolgte mit der Software Clarity Crom.

### Rasterelektronenmikroskopie

Die Rasterlelektronenmikroskopaufnahmen wurden auf einem Crossbeam 450 der Carl Zeiss Microscopy GmbH durchgeführt, es wurde dabei die Software SmartSEM verwendet.

### BET-Messungen

Die BET-Messungen erfolgten auf einem 3 Flex Oberflächenanalysator der Firma Micromeritics mittels Physisorption, dabei wurde die Software 3 Flex betrieben.

### Messung der Magnetisierung

Die Messung der Magnetisierung erfolgte auf einem Cryogene Vibrating Sample Magnetometer, Modell VersalabTM 3T.

### 2 Ausgangsmaterialien

Für die Versuche wurden die Chemikalien und Materialien gemäß Tabelle 1 verwendet.

**Tabelle 1: Chemikalien und Materialien.**

| Chemikalien/Materialien | Anbieter |
|---|---|
| Oliven kerne | KapPa Antipasti GmbH (Gießen, Deutschland) |
| Splitt 2 bis 4 mm | - |
| Zinkchlorid (ZnCl₂) | Sigma Aldrich |
| Aluminiumchlorid (AlCl₃) | Carl Roth GmbH + Co. KG |
| Bleichlorid (PbCl₂) | Sigma Aldrich |
| Acetylsalicylsäure | Sigma Aldrich |
| Magnetit-Nanopartikel | vom Anmelder hergestellt^{a)} |
| 1 molare Salzsäure | Roth |
| 1 molare Natronlauge | Roth |

| | |
|---|---|
| a) Hergestellt nach: Saadat, R., Renz, F., Simultaneous cancer control and diagnosis with magnetic nanohybrid materials, Beilstein J. Nanotech, 7, 121-125, 2016. | |

### 3 Herstellung magnetisierter Fruchtkerne

Es wurden 40 g Olivenkerne in ein Becherglas (1 000 mL) mit 200 mL deionisiertem Wasser und 60 g Splitt, welcher zur Abtrennung von Fruchtresten zugesetzt wurde, gegeben. Die Mischung wurde nun für 120 Minuten bei 100°C mit einem KPG-Rührer durchmischt. Nach Abkühlen der Mischung wurden mit geeigneten Sieben (Maschenweite 5 mm und 1 mm) zunächst der Splitt und dann die Olivenkerne aus der Mischung separiert. Die Olivenkerne wurden anschließend mit frischem deionisiertem Wasser nachgespült und in einem Becherglas für 24 Stunden bei 60°C getrocknet.

Die getrockneten Olivenkerne wurden mit einer Rotorschnellmühle (Pulverisette 14, Fritsch, Geschwindigkeit: 6, Siebmaschenweite: 1 mm) gemahlen. Dazu wurden die Olivenkerne langsam nacheinander in den Trichter der Mühle gegeben.

Je 2 g der gemahlene Olivenkerne und 0,2 g Magnetit-Nanopartikel wurden in den Schwingbecher einer Schwingmühle (Typ: MM 400, Retsch) gefüllt (Schwingkugel Größe 20,0 mm) und bei einer Frequenz von 30 Hz für 1 Minute gemahlen, wonach ein Verbund entstanden war und magnetisierte Olivenkerne erhalten wurden. Dieser Partikel werden im Folgenden mit OK-MNP abgekürzt.

### 4 Adsorption von Metallkationen und Acetylsalicylsäure

Die Aluminium- und Bleisalze sowie Acetylsalicylsäure gemäß Tabelle 1 wurden in je einem Zentrifugenröhrchen (Volumen 50 mL, Fisherbrand) vorgelegt und mit deionisiertem Wasser auf 50 mL aufgefüllt und schließlich durch Schütteln, oder falls nötig durch Zuhilfenahme eines Ultraschallbads, gelöst. Die Ausgangskonzentration der Lösungen kann den Tabellen 2 bis 4 entnommen werden. Anschließend wurden je 2.5 mL der erhaltenen Lösungen mit einer Spritze in Schnappdeckelgläser überführt und je 0.5 g OK-NMP oder 0.5 g gemahlener und gewaschener Olivenkerne ohne magnetische Nanopartikel zugesetzt. Die erhaltenen Mischungen wurden in einem Intelli-Mixer (Typ: RM-2S von ELMI) geschüttelt (Einstellung Mode C1, 60 Umdrehungen pro Minute). Während des Schüttelvorgangs wurde zu den in den Tabellen 2 bis 4 angegebenen Zeiten Proben entnommen und diese mittels optischer Emissionsspektrometrie, mit induktiv gekoppeltem Licht/Plasma (ICP-OES), für die anorganische Salze, und Hochleistungsflüssigkeitschromatographie, für Acetylsalicylsäure, analysiert.

**Tabelle 2: Adsorption von Metallkationen mit magnetisierten Olivenkernen.**

| t [h] | c_{(Al3+)} [mg/L] | c_{(Pb2+)} [mg/L] |
|---|---|---|
| 0 | 17,1 | 36,5 |
| 1 | 10,0 | 19,1 |

**Tabelle 3: Adsorption von Metallkationen mit Olivenkernen.**

| t [h] | c_{(Al3+)} [mg/L] | c_{(Pb2+)} [mg/L] |
|---|---|---|
| 0 | 17,1 | 32,3 |
| 1 | 11,2 | 22,9 |

Dem Vergleich der Tabellen 2 und 3 kann entnommen werden, dass die magnetischen Nanopartikel die Adsorptionseigenschaften der verwendeten Olivenkerne nicht beeinträchtigen. Bereits nach 1 Stunde wurde die Konzentration an Metallkationen im Wasser durch die nach dem erfindungsgemäßen Verfahren hergestellten Olivenkerne nahezu halbiert.

**Tabelle 4: Adsorption von Acetylsalicylsäure (ASS) mit man. Olivenkernen.**

| t [h] | C_{(ASS)} [mg/L] |
|---|---|
| 0 | 9,1 |
| 1 | 8,6 |
| 48 | 0 |

Tabelle 4 kann entnommen werden, dass die Konzentration an Acetylsalicylsäure im durch die nach dem erfindungsgemäßen Verfahren hergestellten im Wesentlichen unverkohlten Olivenkerne nach 1 Stunde um 0.5 mg/L reduziert wurde, nach 48 Stunden war die Acetylsalicylsäure vollständig aus dem Wasser entfernt.

### 5 Rasterelektronenmikroskopuntersuchungen

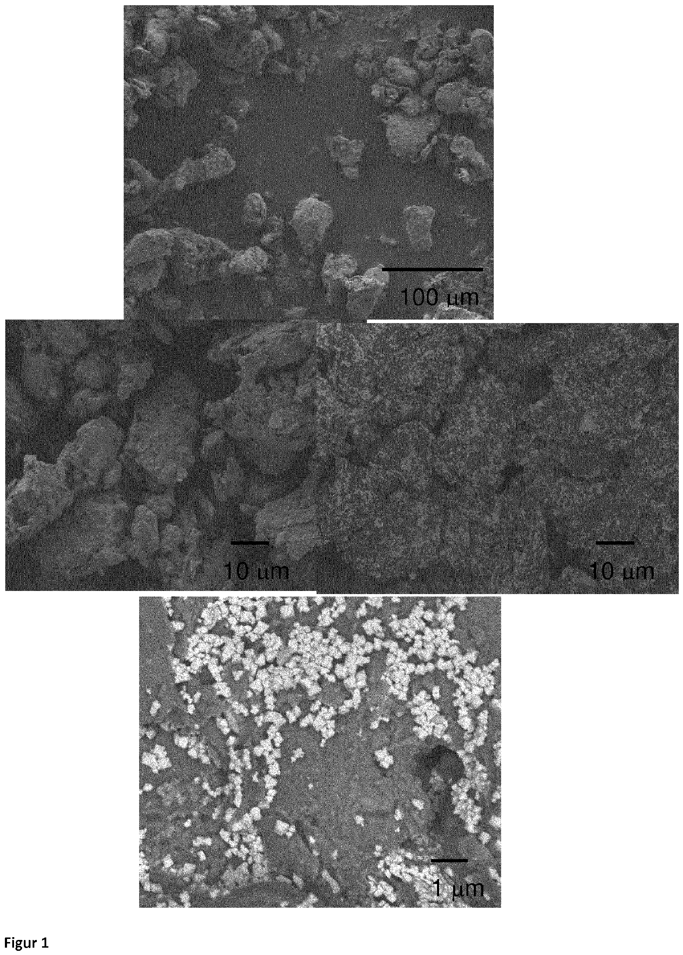

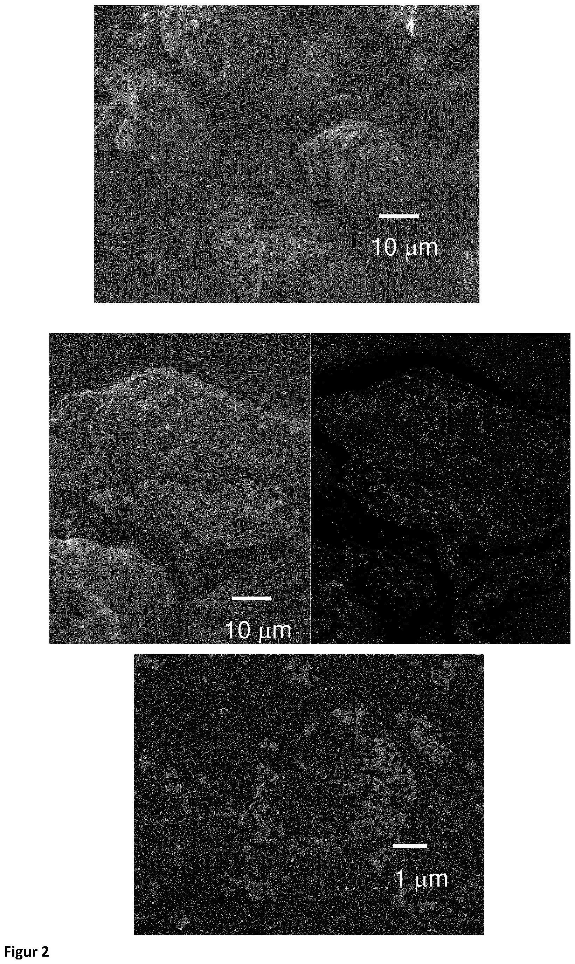

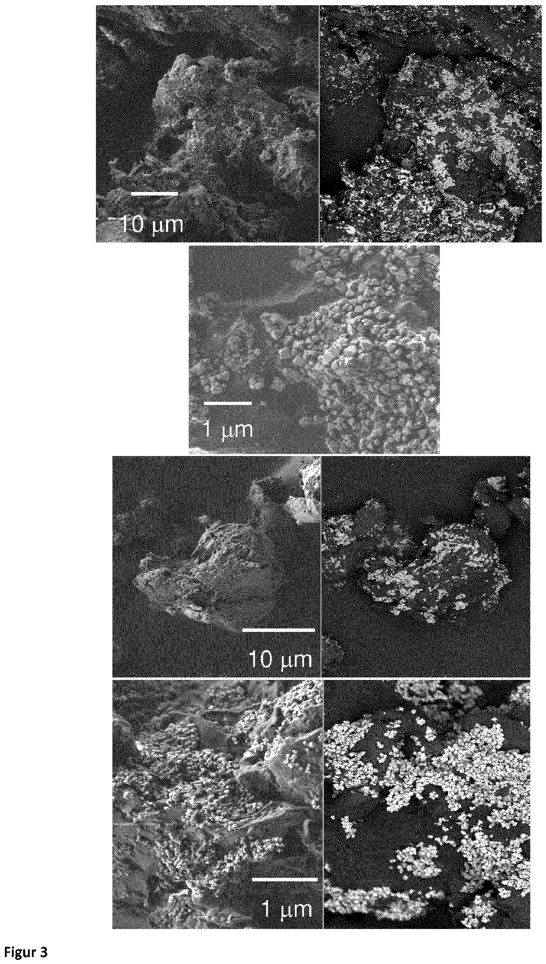

In 4 Bechergläsern wurden je 0,5 g der wie oben beschrieben hergestellten OK-MNP (vor und nach Adsorption von Pb²⁺) gegeben und mit 250 mL deionisiertem. Wasser aufgefüllt. Dann wurde der pH-Wert durch Zuhilfenahme von 1 molarer HCl bzw. 1 molarer NaOH in einem Becherglas auf einen pH-Wert von 4 und in dem anderen Becherglas auf einen pH-Wert von 12 eingestellt. In zwei Bechergläsern wurde der pH bei 7 belassen. Anschließend wurden die Mischungen für 24 Stunden mit einem KPG-Rührer durchmischt. Hierfür wurden 2,5 mL in eine Spritze aufgezogen und in ein Schnappdeckelglas überführt. Dann wurde ein Magnet an das Schnappdeckelglas gehalten, sodass die OK-MNP von ihm angezogen wurden und die Flüssigkeit abgeschüttet werden konnte. Danach wurden die Gläser für ein paar Stunden offen stehen gelassen, damit die restliche Flüssigkeit entweichen konnte und sich nur noch magnetisierte Olivenkerne in den Gläsern befanden. Anschließend wurden die Proben mittels Rasterelektronenmikroskopie analysiert, die Aufnahmen werden in den Figuren 1 bis 3 gezeigt.

**Figur 1** zeigt einen Verbund aus Olivenkernen und magnetischen Nanopartikeln vor der Adsorption von Schadstoffen. Die beiden mittleren Aufnahmen unterscheiden sich nur bezüglich des Kontrasts. Die magnetischen Nanopartikel sind homogen auf der Oberfläche des Olivenkerns verteilt.

**Figur 2** zeigt einen Verbund aus Olivenkernen und magnetischen Nanopartikein nach 48 h Adsorption von Pb²⁺ (bei pH 7 und 25°C). Die beiden mittleren Aufnahmen unterscheiden sich nur bezüglich des Kontrasts.

**Figur 3** zeigt einen Verbund aus Olivenkernen und magnetischen Nanopartikeln nach 48 h Adsorption von Pb²⁺ (die drei oberen Aufnahmen wurden bei pH 4 aufgenommen und die 4 unter unteren Aufnahmen bei pH 12, die Temperatur betrug jeweils 25°C). Aus den Aufnahmen kann entnommen werden, dass nach erfolgter Adsorption bei verschiedenen pH-Werten keine strukturellen Änderungen des Verbunds aus Olivenkernen und magnetischen Nanopartikel erfolgte.

## Patentansprüche

1. Verfahren zur Herstellung von magnetisierten Fruchtkernen, die verkohlte Anteile von unter 1 Gew.-% bezogen auf 100 Gew.-% des Fruchtkerns aufweisen, umfassend die folgenden Schritte:
a) Bereitstellen von Fruchtkernen, die keinem Pyrolyse- oder Verkohlungsprozess unterworfen wurden;
b) Bereitstellen von magnetischen Nanopartikeln;
c) Vermahlen der Fruchtkerne aus Schritt a);
d) Erstellen eines Verbunds der magnetischen Nanopartikel aus Schritt b) und der Fruchtkerne aus Schritt c), durch Co-Vermahlen der magnetischen Nanopartikel aus Schritt b) in Gegenwart der Fruchtkerne gemäß Schritt c) wobei magnetisierte Fruchtkerne erhalten werden, die verkohlte Anteile von unter 1 Gew.-% bezogen auf 100 Gew.-% des Fruchtkerns aufweisen.

2. Verfahren nach Anspruch 1, **dadurch gekennzeichnet, dass** die in Schritt a) bereitgestellten Fruchtkerne ausgewählt sind aus der Gruppe bestehend aus Avocadokernen, Aprikosenkernen, Dattelkernen, Pflaumenkernen, Kirschkernen, Pfirsichkernen, Nektarinenkernen, Olivenkernen und Mischungen hiervon.

3. Verfahren nach Anspruch 1 oder 2, **dadurch gekennzeichnet, dass** die in Schritt b) bereitgestellten magnetischen Nanopartikel ausgewählt sind aus der Gruppe bestehend aus Magnetit, Maghemit, gemischten Eisenoxiden bei denen Eisen teilweise durch andere Metalle, vorzugsweise durch Magnesium, ersetzt ist und Mischungen daraus.

4. Verfahren nach einem der vorherigen Ansprüche, **dadurch gekennzeichnet, dass** es sich bei den in Schritt a) bereitgestellten Fruchtkernen um Olivenkerne handelt und dass es sich bei den in Schritt b) bereitgestellten magnetischen Nanopartikeln um Magnetit handelt.

5. Verfahren nach einem der vorherigen Ansprüche, **dadurch gekennzeichnet, dass** das Verfahren die folgenden weiteren Schritte umfasst:
e) Waschen der i Fruchtkerne die verkohlte Anteile von unter 1 Gew.-% bezogen auf 100 Gew.-% des Fruchtkerns aufweisen mit einem Lösemittel vor Schritt d);
f) Entfernen des in Schritt e) verwendeten Lösemittels;
g) Trocknen der Fruchtkerne die verkohlte Anteile von unter 1 Gew.-% bezogen auf 100 Gew.-% des Fruchtkerns aufweisen.

6. Verfahren nach Anspruch 5, **dadurch gekennzeichnet, dass**
das in Schritt e) verwendete Lösemittel ausgewählt ist aus der Gruppe bestehend aus Wasser, organischen Lösemitteln, insbesondere Alkoholen, Aceton, Toluol, Tetrahydrofuran und Mischungen hiervon; und/oder
die Trocknung in Schritt g) bei Temperaturen von 30 bis 150°C, bevorzugt von 50 bis 70°C durchgeführt wird.

7. Verfahren nach einem der vorherigen Ansprüche, **dadurch gekennzeichnet, dass** die Vermahlung gemäß Schritt c) in einer Rotormühle durchgeführt wird, bevorzugt wird vermahlen bis die Fruchtkerne einen *d*₅₀ von 1 bis 100 µm und bevorzugt von 1 bis 20 µm aufweisen.

8. Verfahren nach einem der vorherigen Ansprüche, **dadurch gekennzeichnet, dass** das Massenverhältnis zwischen den magnetischen Nanopartikeln und den Fruchtkernen von 1:4 bis 1:15 und bevorzugt von 1:9 bis 1:11 beträgt und am meisten bevorzugt 1:10 ist.

9. Verfahren nach Anspruch 8, **dadurch gekennzeichnet, dass** Schritt c) in derselben Mühle wie Schritt d) durchgeführt wird, wobei die magnetischen Nanopartikel vorzugsweise nach Schritt c) in die Mühle eingebracht werden.

10. Verfahren nach Anspruch 8 oder 9, **dadurch gekennzeichnet, dass**
die Co-Vermahlung in einer Mühle ausgewählt aus der Gruppe bestehend aus Kugelmühlen, insbesondere Schwingmühlen, Trommelmühlen, Planetenkugelmühlen, Scheibenmühlen, insbesondere Scheibenschwingmühlen durchgeführt wird; und/oder
co-vermahlen wird bis die magnetisierten Fruchtkerne die verkohlte Anteile von unter 1 Gew.-% bezogen auf 100 Gew.-% des Fruchtkerns aufweisen einen *d*₅₀ von 1 bis 300 µm, besonders bevorzugt 10 bis 100 µm aufweisen.

## Claims

1. A method of producing magnetised fruit stones having carbonised fractions of less than 1 wt.% based on 100 wt.% of the fruit stone, comprising the following steps:
a) providing fruit stones that have not been subjected to a pyrolysis or carbonisation process;
b) providing magnetic nanoparticles;
c) grinding the fruit stones from step a);
d) creating a composite of the magnetic nanoparticles from step b) and the fruit stones from step c) by co-grinding the magnetic nanoparticles from step b) in the presence of the fruit stones according to step c), magnetised fruit stones being obtained which have carbonised fractions of less than 1 wt.% based on 100 wt.% of the fruit stone.

2. The method according to claim 1, **characterised in that** the fruit stones provided in step a) are selected from the group consisting of avocado stones, apricot stones, date stones, plum stones, cherry stones, peach stones, nectarine stones, olive stones and mixtures thereof.

3. The method according to claim 1 or 2, **characterised in that** the magnetic nanoparticles provided in step b) are selected from the group consisting of magnetite, maghemite, mixed iron oxides in which iron is partly replaced by other metals, preferably by magnesium, and mixtures thereof.

4. The method according to one of the preceding claims, **characterised in that** the fruit stones provided in step a) are olive stones and that the magnetic nanoparticles provided in step b) are magnetite.

5. The method according to one of the preceding claims, **characterised in that** the method comprises the following further steps:
e) washing the fruit stones having carbonised fractions of less than 1 wt.% based on 100 wt.% of the fruit stone with a solvent before step d);
f) removing the solvent used in step e);
g) drying the fruit stones having carbonised fractions of less than 1 wt.% based on 100 wt.% of the fruit stone.

6. The method according to claim 5, **characterised in that**
the solvent used in step e) is selected from the group consisting of water, organic solvents, in particular alcohols, acetone, toluene, tetrahydrofuran and mixtures thereof; and/or
the drying in step g) is carried out at temperatures of 30 to 150°C, preferably of 50 to 70°C.

7. The method according to one of the preceding claims, **characterised in that** the grinding according to step c) is carried out in a rotor mill, grinding preferably being carried out until the fruit stones have a *d₅₀* of 1 to 100 µm and preferably of 1 to 20 µm.

8. The method according to one of the preceding claims, **characterised in that** the mass ratio between the magnetic nanoparticles and the fruit stones is from 1:4 to 1:15 and preferably from 1:9 to 1:11 and is most preferably 1:10.

9. The method according to claim 8, **characterised in that** step c) is carried out in the same mill as step d), the magnetic nanoparticles preferably being introduced into the mill after step c).

10. The method according to claim 8 or 9, **characterised in that**
the co-grinding is carried out in a mill selected from the group consisting of ball mills, in particular vibratory mills, drum mills, planetary ball mills, disc mills, in particular vibratory disc mills; and/or
co-grinding is carried out until the magnetised fruit stones having carbonised fractions of less than 1 wt.% based on 100 wt.% of the fruit stone have a *d₅₀* of 1 to 300 µm, particularly preferably 10 to 100 µm.

## Revendications

1. Procédé de fabrication de noyaux de fruits aimantés, qui présentent des proportions carbonisées inférieures à 1 % en poids pour 100 % en poids du noyau de fruit, comprenant les étapes suivantes :
a) fourniture de noyaux de fruits qui n'ont été soumis à aucune opération de pyrolyse ou de carbonisation ;
b) fourniture de nanoparticules magnétiques ;
c) broyage des noyaux de fruits de l'étape a) ;
d) préparation d'un matériau composite des nanoparticules magnétiques de l'étape b) et des noyaux de fruits de l'étape c) par co-broyage des nanoparticules magnétiques de l'étape b) en présence des noyaux de fruits selon l'étape c), avec obtention de noyaux de fruits aimantés, qui présentent des proportions carbonisées inférieures à 1 % en poids pour 100 % en poids des noyaux de fruits.

2. Procédé selon la revendication 1, **caractérisé en ce que** les noyaux de fruits fournis dans l'étape a) sont choisis dans le groupe comprenant les noyaux d'avocat, les noyaux d'abricot, les noyaux de datte, les noyaux de prune, les noyaux de cerise, les noyaux de pêche, les pépins de nectarine, les noyaux d'olive et les mélanges de ceux-ci.

3. Procédé selon la revendication 1 ou 2, **caractérisé en ce que** les nanoparticules magnétiques fournies dans l'étape b) sont choisies dans le groupe consistant en la magnétite, la maghémite, les oxydes de fer mixtes dans lesquels le fer est en partie remplacé par d'autres métaux, de préférence par le magnésium, et les mélanges de ceux-ci.

4. Procédé selon l'une des revendications précédentes, **caractérisé en ce que**, pour ce qui concerne les noyaux de fruits fournis dans l'étape a), il s'agit de noyaux d'olive, et que, pour ce qui concerne les nanoparticules magnétiques fournies dans l'étape b), il s'agit de magnétite.

5. Procédé selon l'une des revendications précédentes, **caractérisé en ce que** le procédé comprend les étapes supplémentaires suivantes :
e) lavage des noyaux de fruits qui présentent des proportions carbonisées inférieures à 1 % en poids pour 100 % en poids du noyau de fruit, avec un solvant, avant l'étape d) ;
f) élimination du solvant utilisé dans l'étape e) ;
g) séchage des noyaux de fruits qui présentent des proportions carbonisées inférieures à 1 % en poids pour 100 % en poids du noyau de fruit.

6. Procédé selon la revendication 5, **caractérisé en ce que** le solvant utilisé dans l'étape e) est choisi dans le groupe consistant en l'eau, les solvants organiques, en particulier les alcools, l'acétone, le toluène, le tétrahydrofuranne et les mélanges de ceux-ci ; et/ou le séchage de l'étape g) est réalisé à des températures de 30 à 150 °C, de préférence de 50 à 70 °C.

7. Procédé selon l'une des revendications précédentes, **caractérisé en ce que** le broyage selon l'étape c) est réalisé dans un broyeur à rotor, et de préférence est broyé jusqu'à ce que les noyaux de fruits présentent un d₅₀ de 1 à 100 µm et de préférence de 1 à 20 µm.

8. Procédé selon l'une des revendications précédentes, **caractérisé en ce que** le rapport en masse des nanoparticules magnétiques aux noyaux de fruits est de 1:4 à 1:15, et de préférence de 1:9 à 1:11, et est d'une manière particulièrement préférée de 1:10.

9. Procédé selon la revendication 8, **caractérisé en ce que** l'étape c) est réalisée dans le même broyeur que dans l'étape d), les nanoparticules magnétiques étant introduites dans le broyeur de préférence après l'étape c).

10. Procédé selon la revendication 8 ou 9, **caractérisé en ce que**
le co-broyage est réalisé dans un broyeur choisi dans le groupe consistant en les broyeurs à billes, en particulier les broyeurs vibrants, les broyeurs à tambour, les tambours planétaires à billes, les tambours à disques, en particulier les tambours vibrants à disques ; et/ou
le co-broyage est réalisé jusqu'à ce que les noyaux de fruits aimantés présentent des proportions carbonisées inférieures à 1 % en poids pour 100 % en poids du noyau de fruit et présentent un d₅₀ de 1 à 300 µm, d'une manière particulièrement préférée de 10 à 100 µm.
